# EUROPÄISCHE PATENTANMELDUNG

(11) **EP 1 184 071 A1**
(43) Veröffentlichungstag der Anmeldung: **06.03.2002**
(21) Anmeldenummer: 01116080.1
(22) Anmeldetag: 03.07.2001
(51) Int. Cl.: B01F 13/00, B01F 15/02, B29B 7/76, B05B 7/24

(54) **Verfahren zum Mischen von zwei fliessfähigen Reaktions-Komponenten sowie Vorrichtung**

(30) Priorität: 01.09.2000 DE 10043490
(71) Anmelder: Heraeus Kulzer GmbH & Co.KG, 63450 Hanau (DE)
(72) Erfinder: Sofsky, Christof, 63486 Bruchköbel (DE); Schuster, Martin, Dr., 63825 Schöllkrippen (DE); Kimmel, Rudolf, 63791 Karlstein (DE)
(74) Vertreter: Kühn, Hans-Christian

(57) **Zusammenfassung**

Zum Mischen von zwei fließfähigen Reaktionskomponenten, insbesondere von zwei Silikon-Komponenten oder einer Silikon-Komponente mit einem Härter, werden die Reaktions-Komponenten (A, B) jeweils aus einer Vorratskammer (1, 2) über separate Saugleitungen (3, 4) jeweils einem Eingang einer als Schlauchpumpe ausgebildeten Fördereinrichtung (5, 6) zugeführt, wobei die Reaktions-Komponenten jeweils über einen eigenen Ausgang die Fördereinrichtung verlassen und anschließend über jeweils einen separaten Eingang (16, 17) einer Mischvorrichtung (15) zugeführt werden, in der sie miteinander gemischt werden, wobei ein fließfähiges Gemisch aus den Reaktions-Komponenten die Mischvorrichtung über eine Mischdüse (18) als Ausgang verlässt.

In einer bevorzugten Ausgestaltung wird der Schlauch durch wenigstens einen auf einem Rotor exzentrisch angeordneten Verdrängerkörper periodisch zusammen gequetscht.

## Beschreibung

Die Erfindung betrifft ein Verfahren zum Mischen von zwei fließfähigen Reaktions-Komponenten, insbesondere zweier Silikon-Komponenten oder einer Silikon-Komponente mit Härter, die jeweils aus einer Vorratskammer über separate Saugleitungen jeweils einem Eingang wenigstens einer Fördereinrichtung zugeführt werden, wobei die Reaktions-Komponenten jeweils über einen eigenen Ausgang die Fördereinrichtung verlassen und anschließend über jeweils einen separaten Eingang einer Mischvorrichtung zugeführt, und miteinander gemischt werden, wobei ein fließfähiges Gemisch aus den Reaktionskomponenten die Mischvorrichtung über eine Misch-Düse als Ausgang verlässt, sowie eine Vorrichtung.

Aus der DE 38 39 319 A1 ist eine Dosier- und Mischvorrichtung zum Mischen von zwei flüssigen Reaktionskomponenten bekannt, wobei die Dosier- und Mischvorrichtung zwei Speicherkammern für die Reaktionskomponenten aufweist, die jeweils über einen Verbindungsschlauch an eine gesonderte Zahnradpumpe angeschlossen sind. Von den Zahnradpumpen gehen Förderschläuche aus, die außerhalb des Vorrichtungsgehäuses verlaufen und zu einer Ausbringeinrichtung mit einem Handgriff und einer auswechselbaren Mischdüse führen, in der die beiden Komponenten erst mal zusammengeführt werden.

Die Ausbringeinrichtung kann je nach Bedarf entweder von Hand geführt oder mittels einer Halterung an der als Standgerät ausgeführten Vorrichtung in einer festen Abgabestellung angeordnet werden.

Als problematisch erweist sich bei bisher üblichen Dosier- und Mischvorrichtungen die Möglichkeit ein verlustfreies Dosieren von Silikon vorzunehmen, da die vorherrschenden Zahnradpumpen einem sehr hohen Verschleiß unterliegen und im Falle eines Fehlers nur sehr aufwendig gereinigt und repariert werden können; weiterhin können beim Anrühren von Massen Verluste durch Abwiegen und Anrühren entstehen.

Weiterhin ist aus der DT 21 62 998 eine Peristaltik-Schlauchpumpe mit einem Rotor für extra corporale Blutkreisläufe bekannt, bei der ein Schlauchbett mittels eines Verstellelements wie Exzenter, Mutter oder dergleichen über ein elastisches Glied radial zum Rotor mit seinen im Randbereich befindlichen Druckrollen verschoben werden kann und dadurch der spezifische Dichtdruck der Druckrolle während des Betriebes mit Hilfe von Markierungen und Rasten wählbar ist.

Es handelt sich hierbei um eine verhältnismäßig aufwendige Vorrichtung.

Die Erfindung stellt sich die Aufgabe ein Verfahren zur vereinfachten Mischung von Reaktions-Komponenten sowie eine Dosier- und Mischvorrichtung anzugeben, die auf einer möglichst einfachen Konstruktion beruht und sich im laufenden Betrieb als kostengünstig erweist.

Die Aufgabe wird verfahrensgemäß dadurch gelöst, dass wenigstens eine der Reaktions-Komponenten durch eine Schlauchpumpe als Fördereinrichtung mittels wenigstens eines relativ zum Schlauch bewegten Verdrängerkörpers, der den Schlauch entlang der Förderrichtung der Komponente(n) zusammen quetscht, getrieben wird.

In einer vorteilhaften Ausgestaltung des Verfahrens wird der Schlauch durch wenigstens einen auf einem sich drehenden Rotor exzentrisch angeordneten Verdrängerkörper periodisch zusammen gequetscht.

Als vorteilhaft erweist es sich, dass nur verhältnismäßig einfache und kostengünstig zu wechselnde flexible Schläuche eingesetzt werden, wobei kein besonderes Fachpersonal zur Vorbereitung für einen neuen Mischvorgang mehr erforderlich ist.

Die Aufgabe wird für eine Vorrichtung zum Mischen von zwei fließfähigen Reaktions-Komponenten , die jeweils aus einer Vorratskammer über separate Saugleitungen jeweils einem Eingang wenigstens einer Fördereinrichtung zuführbar sind, wobei die Fördereinrichtung jeweils einen Ausgang zur Zufuhr der jeweiligen Reaktions-Komponenten an jeweils einen Eingang einer Mischvorrichtung aufweist, die eine Misch-Düse als Ausgang für ein fließfähiges Gemisch aus dem Reaktions-Komponenten enthält, dadurch gelöst, dass die wenigstens eine Fördereinrichtung als Schlauchpumpe ausgebildet ist, wobei ein jeweils eine Komponente enthaltender flexibler Schlauch im Querschnitt gesehen durch wenigstens einen in Förderrichtung beweglichen Verdrängerkörper periodisch deformierbar ist.

In einer bevorzugten Ausgestaltung der Vorrichtung ist jede der beiden Vorrats-Kammern jeweils mit einer Saugleitung verbunden, die jeweils als Teil des flexiblen Schlauches der Schlauchpumpe ausgebildet ist.

Weiterhin ist vorzugsweise jeder der beiden Eingänge der Mischvorrichtung mit einer Förderleitung verbunden, die als Teil des flexiblen Schlauches der jeweiligen Schlauchpumpe ausgebildet ist.

In einer bevorzugten Ausgestaltung der Erfindung ist die Fördereinrichtung als Peristaltik-Schlauch-Pumpe ausgebildet, die wenigstens einen drehbar angeordneten Exzenter als Verdrängerkörper aufweist, der mit einem Antriebsmotor verbunden ist.

Zur Vereinfachung der Auswechselbarkeit des jeweiligen flexiblen Schlauches ist das Pumpengehäuse der Fördervorrichtung mit einem aufklappbaren Deckel versehen.

Somit ist es auch ohne besonderes fachmännisches Können möglich, eine solche Dosier- und Mischvorrichtung wieder in Betrieb zu nehmen.

Als Antriebsmotor wird vorzugsweise ein Elektromotor mit einstellbarer Drehzahl eingesetzt.

In einer ersten Ausführungsform der Vorrichtung ist die Fördereinrichtung als eine Zwei-Kammer-Schlauchpumpe ausgebildet.

In einer zweiten Ausgestaltung der Vorrichtung besteht die Fördereinrichtung aus zwei separaten Ein-Kammer-Schlauchpumpen.

Vorteilhafte Ausgestaltungen der Vorrichtung sind in den Ansprüchen 4 bis 12 angegeben.

Als besonders vorteilhaft erweist sich die einfache und rasche Inbetriebnahme der erfindungsgemäßen Mischvorrichtung durch komplettes Auswechseln der in der Fördereinrichtung vorhandenen Schläuche, so dass komplizierte und unsichere Reinigungsvorgänge komplett entfallen.

Dies ist besonders wichtig bei aufeinander folgendem Einsatz von Silikonkomponenten unterschiedlicher Zusammensetzung.

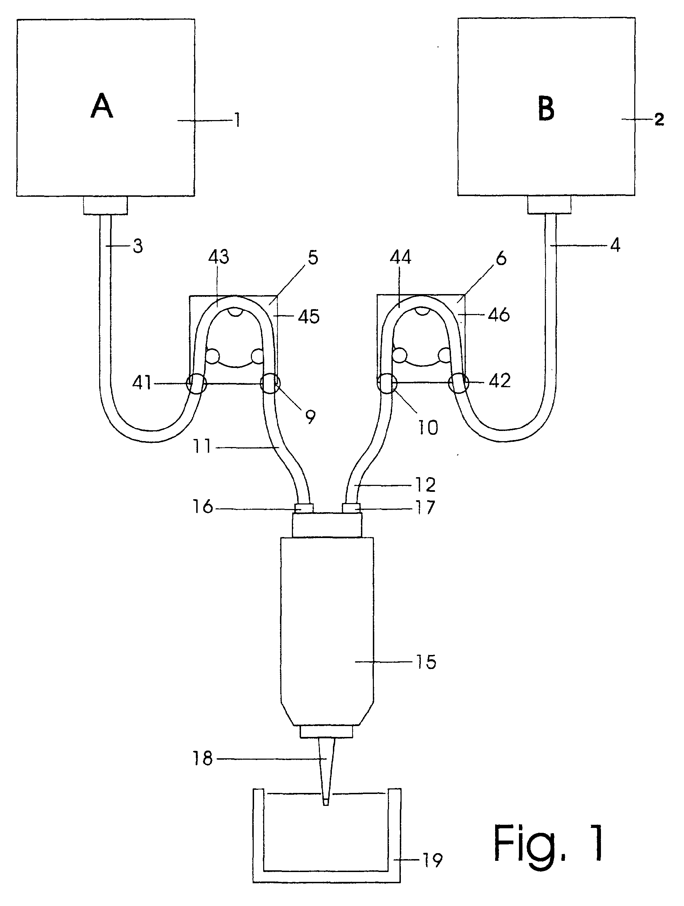

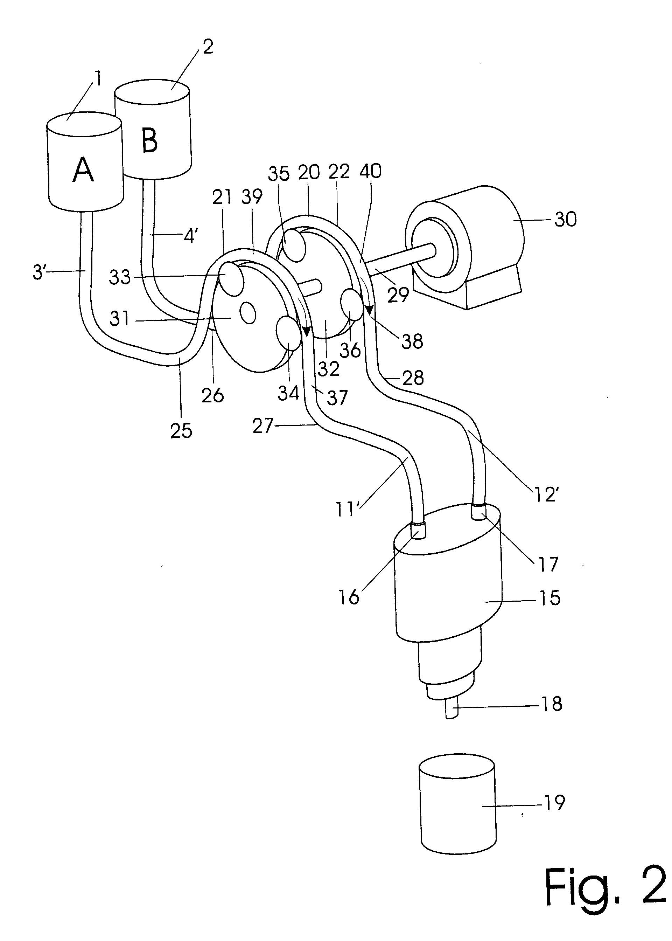

Im folgenden ist der Gegenstand der Erfindung anhand der Figuren 1 und 2 näher erläutert.

Figur 1 zeigt schematisch eine Vorrichtung mit zwei getrennten Vorratskammern als Silikonbehälter, von denen jeder eine bestimmte Silikonkomponente aufweist und jeweils über eine eigene Schlauchpumpe mit einer für beide Silikonkomponenten gemeinsamen Mischvorrichtung verbunden ist.

Figur 2 zeigt schematisch eine Anordnung mit einer Zwei-Kammer-Schlauchpumpe, bei der beide Komponenten in jeweils getrennten Schläuchen parallel zueinander in Richtung Mischdüse getrieben werden. Das zum Auffangen des Exzenter-Drucks erforderliche Schlauchbett ist zwecks besserer Übersicht nicht dargestellt.

Gemäß Figur 1 ist ein Vorratsbehälter 1 mit einer Silikonkomponente "A" gefüllt, während ein dazu parallel angeordneter zweiter Vorratsbehälter 2 eine Silikonkomponente "B" bzw. einen Silikon-Härter enthält. Die Vorratsbehälter 1 und 2 sind jeweils über flexible Schläuche 3 und 4 als Saugleitungen mit jeweils einer als Schlauchpumpe ausgebildeten Fördereinrichtung 5, 6 verbunden, deren Ausgang 9, 10 über jeweils ein Schlauchende bzw. einen zusätzlichen flexiblen Förderschlauch 11, 12 mit einer Mischvorrichtung 15 verbunden, wobei der flexible Förderschlauch 11 mit dem ersten Eingang 16, der zusätzliche flexible Förderschlauch 12 mit dem zweiten Eingang 17 von Mischvorrichtung 15 verbunden ist. Innerhalb der Mischvorrichtung 15 findet der eigentliche Mischvorgang statt, wobei eine gleichmäßige Massenzufuhr aus beiden Förderschläuchen 11, 12 ein Mischungsverhältnis von 1:1 zur Folge hat, während unterschiedliche Fördergeschwindigkeiten der Schlauchpumpen zu einem unterschiedlichen Mischungsverhältnis führen. So ist es beispielsweise möglich bei einer Verdoppelung der Förderleistung von Fördereinrichtung 5 gegenüber Fördereinrichtung 6 ein Mischungsverhältnis von 2:1 in der Mischvorrichtung 15 zu erzielen, sofern sich die spezifische Dichte von den Silikon-Komponenten "A" und "B" nicht wesentlich unterscheidet. Am Ausgang bzw. der Düse 18 der Mischvorrichtung 15 tritt somit das aus beiden Komponenten "A" und "B" zusammengesetzte Silikonmaterial aus und wird dem jeweiligen Anwendungsbereich z.B. einer abzudichtenden Fuge oder einer Küvette 19 zur weiteren Bearbeitung des Silikonmaterials zugeführt.

Eine solche Düse besteht vorwiegend aus Kunststoff, wobei sie ggf. nach einer Standzeit von 1 Nacht auszuwechseln ist; solche Düsen werden nach dem Aushärten weggeworfen.

Gemäß Figur 1 wird vorzugsweise eine Fördereinrichtung 5, 6 als Schlauchpumpe mit eigenen auswechselbaren Schlauchstrecken 43, 44 eingesetzt, wobei sich durch Öffnen des jeweiligen Gehäusedeckels 45, 46 (schematisch dargestellt) der Fördereinrichtung 5, 6 ein einfacher Wechsel des jeweils in der Fördereinrichtung befindlichen Schlauchs bzw. der Schlauchstrecke 43, 44 durchführen lässt.

Gemäß Figur 2 ist es auch möglich, anstelle von zwei separaten Fördereinrichtungen (gemäß Figur 1) eine zusammenhängende Fördereinrichtung 20 mit zwei Kammern 21, 22 vorzusehen, an deren Eingänge 25, 26 flexible Schläuche 3', 4' als Saugleitungen die jeweils eine der beiden Silikonkomponenten "A" und "B" aus den Vorratsbehältern 1, 2 fördern, angeschlossen sind; die Schlauchpumpen der beiden Kammern 21, 22 umfassen jeweils einen Teil des flexiblen Schlauches der Saugleitungen 3', 4', wobei durch jeweils einen mittels Antriebsmotor 30 und Welle 29 in Drehung versetzten Rotors 31, 32 wenigstens ein Verdränger-Körper 33, 34 bzw. 35, 36 gegen die nach innen gerichtete Seite des jeweils kreisbogenförmig ausgebildeten Schlauchabschnitts 39, 40 der flexiblen Schläuche 3', 4' gepresst wird. Aufgrund der Rotordrehung werden die Komponenten "A" und "B" jeweils in der durch die Pfeile 37, 38 angezeigten Richtung zum jeweiligen Ausgang 27, 28 der Fördereinrichtung befördert. Um einen ausreichenden Pressdruck zu erzeugen, werden die kreisförmigen Schlauchabschnitte 39, 40 auf ihrer äußeren Seite jeweils durch ein hier nicht gezeigtes Schlauchbett abgestützt. Nach Durchlaufen der Fördereinrichtung 20 verlassen die Komponenten "A" bzw. "B" jeweils an den Ausgängen 27, 28 die jeweilige Kammer 21, 22; die Komponenten "A" und "B" werden über einen flexiblen Förder-Schlauch 11', 12' an jeweils einen ersten und einen zweiten Eingang 16, 17 einer Mischvorrichtung 15 geführt. Nach Durchlaufen der Mischvorrichtung 15 tritt die aus den Komponenten "A" und "B" bestehende Komponenten-Mischung bzw. Silikonmischung am Ausgang bzw. der Düse 18 der Mischvorrichtung aus und wird der Weiterverarbeitung, z.B. dem Dichten von Fugen bzw. einer Küvette 19 zugeführt.

Auch hier erweist es sich als besonders zweckmäßig, dass nach Verwendung der Fördereinrichtung durch einfaches Auswechseln der flexiblen Förderschläuche rasch ein neuer Einsatz der beiden Schlauchpumpen bzw. der Zwei-Kammer-Schlauchpumpe möglich wird, indem einfach die aus Saugleitung, Schlauchabschnitt in der Schlauchpumpe und Förderleitung bestehenden Schläuche bzw. separate Schlauchstrecken entsprechend der Figur 1 gegen neue bzw. gereinigte Schläuche bzw. Schlauchstrecken ausgetauscht werden. Dabei ist es auch möglich, die Mischvorrichtung 15 komplett auszutauschen, bzw. sie im Inneren zu reinigen und einer neuen Verwendung zur Mischung von Silikonkomponenten "A" und "B" zuzuführen.

## Patentansprüche

1. Verfahren zum Mischen von zwei fließfähigen Reaktions-Komponenten, insbesondere zweier Silikon-Komponenten oder einer Silikon-Komponente mit Härter, die jeweils aus einer Vorratskammer über separate Saugleitungen jeweils einem Eingang wenigstens einer Fördereinrichtung zugeführt werden, wobei die Reaktions-Komponenten jeweils über einen eigenen Ausgang die Fördereinrichtung verlassen und anschließend über jeweils einen separaten Eingang einer Mischvorrichtung zugeführt, und miteinander gemischt werden, wobei ein fließfähiges Gemisch aus den Reaktionskomponenten die Mischvorrichtung über eine Misch-Düse als Ausgang verlässt, **dadurch gekennzeichnet, dass** wenigstens eine der Reaktions-Komponenten durch eine Schlauchpumpe als Fördereinrichtung mittels wenigstens eines relativ zum Schlauch bewegten Verdrängerkörpers, der den Schlauch entlang der Förderrichtung der Komponente(n) zusammen quetscht, getrieben wird.

2. Verfahren nach Anspruch 1, **dadurch gekennzeichnet, dass** der Schlauch durch wenigstens einen auf einem sich drehenden Rotor exzentrisch angeordneten Verdrängerkörper periodisch zusammen gequetscht wird.

3. Vorrichtung zum Mischen von zwei fließfähigen Reaktions-Komponenten, insbesondere zweier Silikon-Komponenten oder einer Silikon-Komponente mit Härter, die jeweils aus einer Vorratskammer über separate Saugleitungen jeweils einem Eingang wenigstens einer Fördereinrichtung zuführbar sind, wobei die Fördereinrichtung jeweils einen Ausgang zur Zufuhr der jeweiligen Reaktions-Komponenten an jeweils einen Eingang einer Mischvorrichtung aufweist, die eine Misch-Düse als Ausgang für ein fließfähiges Gemisch aus dem Reaktions-Komponenten enthält, **dadurch gekennzeichnet, dass** die wenigstens eine Fördereinrichtung (5, 6; 20) als Schlauchpumpe ausgebildet ist, wobei ein jeweils eine Komponente enthaltender flexibler Schlauch im Querschnitt gesehen durch wenigstens einen in Förderrichtung beweglichen Verdrängerkörper periodisch deformierbar ist.

4. Vorrichtung nach Anspruch 3, **dadurch gekennzeichnet, dass** jede der beiden Vorrats-Kammern (1, 2) jeweils mit einer Saugleitung (3, 4; 3', 4') verbunden ist, die jeweils als Teil des flexiblen Schlauches der Schlauchpumpe ausgebildet ist.

5. Vorrichtung nach Anspruch 3 oder 4, **dadurch gekennzeichnet, dass** jeder der beiden Eingänge (16, 17) der Mischvorrichtung (15) mit jeweils einer Förderleitung (11, 12; 11', 12') verbunden ist, die als Teil des flexiblen Schlauches der jeweiligen Schlauchpumpe ausgebildet ist.

6. Vorrichtung nach Anspruch 3, **dadurch gekennzeichnet, dass** wenigstens eine der beiden Saugleitungen (3, 4) über einen lösbaren Anschluss (41, 42) mit jeweils einem Eingang einer Fördereinrichtung (5, 6) verbunden ist.

7. Vorrichtung nach einem der Ansprüche 3 bis 6, **dadurch gekennzeichnet, dass** die Fördereinrichtung als Peristaltik-Schlauch-Pumpe ausgebildet ist, die wenigstens einen drehbar angeordneten Rotor mit einem Exzenter als Verdrängerkörper aufweist, wobei der Rotor über eine Welle mit einem Antriebsmotor (30) verbunden ist.

8. Vorrichtung nach Anspruch 7, **dadurch gekennzeichnet, dass** als Verdrängerkörper wenigstens eine am Umfang des Rotors drehbar angeordnete Rolle vorgesehen ist.

9. Vorrichtung nach Anspruch 8, **dadurch gekennzeichnet, dass** zwecks Auswechselbarkeit des jeweiligen flexiblen Schlauches das Pumpengehäuse der Fördervorrichtung mit einem aufklappbaren Deckel versehen ist.

10. Vorrichtung nach Anspruch 9, **dadurch gekennzeichnet, dass** als Antriebsmotor (30) ein Elektromotor mit einstellbarer Drehzahl vorgesehen ist.

11. Vorrichtung nach einem der Ansprüche 3 bis 10, **dadurch gekennzeichnet, dass** die Fördereinrichtung (20) als eine Zwei-Kammer-Schlauchpumpe ausgebildet ist.

12. Vorrichtung nach einem der Ansprüche 3bis 11, **dadurch gekennzeichnet, dass** die Fördereinrichtung (5, 6) aus zwei separaten Ein-Kammer-Schlauchpumpen besteht.
